# EUROPEAN PATENT SPECIFICATION

(11) **EP 3 368 839 B1**
(45) Date of publication and mention of the grant of the patent: **23.04.2025**
(21) Application number: 16788126.7
(22) Date of filing: 28.10.2016
(51) Int. Cl.: F25B 25/00, F25B 30/02, F25B 49/02, F25B 41/00

(54) **HEAT PUMP AND METHOD FOR PUMPING HEAT WITH MODE CONTROL ON THE CONDENSER SIDE AND FINE CONTROL ON THE EVAPORATOR SIDE**
WÄRMEPUMPE UND VERFAHREN ZUM PUMPEN VON WÄRME MIT MODUSSTEUERUNG AUF DER KONDENSATORSEITE UND FEINSTEUERUNG AUF DER VERDAMPFERSEITE
POMPE À CHALEUR ET PROCÉDÉ DE POMPAGE DE CHALEUR AVEC COMMANDE DE MODE SUR LE CÔTÉ CONDENSEUR ET COMMANDE PRÉCISE SUR LE CÔTÉ ÉVAPORATEUR

(30) Priority: 30.10.2015 DE 102015221346
(43) Date of publication of application: 05.09.2018
(73) Proprietor: Vertiv S.r.l., 35010 Piove di Sacco, (PD) (IT)
(72) Inventor: SEDLAK, Holger, 82054 Lochhofen / Sauerlach (DE); KNIFFLER, Oliver, 82054 Sauerlach (DE)
(74) Representative: Wunderlich & Heim Patentanwälte PartG mbB
(86) International application number: PCT/EP2016/076134
(87) International publication number: WO 2017/072322

(56) References cited:
- DE-A1- 102010 049 134
- US-A1- 2008 115 515
- US-A1- 2014 260 391
- US-A1- 2015 068 228

## Description

The present invention relates to heat pump applications and in particular to heat pumps comprising operating mode switching.

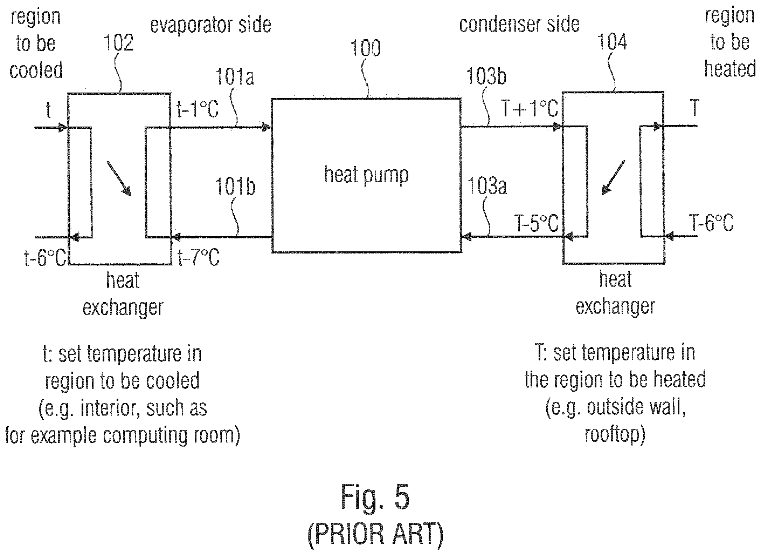

Typical fields of usage of heat pumps are to cool a region to be cooled and/or to heat a region to be heated. A heat pump typically consisting of an evaporator, a compressor and a condenser comprises, for this purpose, an evaporator side on the one hand and a condenser side on the other hand, as is shown exemplarily by the heat pump 100 in Fig. 5. The heat pump is coupled to a heat exchanger 102 on the evaporator side and a heat exchanger 104 on the condenser side. For this purpose, the heat pump 100 in particular includes an evaporator inlet 101a and an evaporator outlet 101b. Above that, the heat pump 100 comprises a condenser inlet 103a and a condenser outlet 103b. The operating liquid on the evaporator side is introduced into the evaporator of the heat pump 100 via the evaporator inlet 101a, cooled there and let out from the evaporator outlet 101b as colder operating liquid. At the same time, as shown in Fig. 5, the evaporator inlet 101a and the evaporator outlet 101b are coupled to the heat exchanger 102, such that a hotter operating liquid (having the temperature t) is fed into the heat exchanger, cooled in the heat exchanger and then transported to the region to be cooled. Typical temperature ratios are shown in Fig. 5, wherein a "heat exchanger loss" of 1 °Celsius is assumed. In particular, e.g., the set temperature is in the region to be cooled.

The heat exchanger 102 or 104 has a primary side directed towards the heat pump and a secondary side facing away from the heat pump, i.e. to the region to be cooled or the region to be heated. The primary side of the heat exchanger 102 includes the hot terminal 101a and the cold terminal 101b, wherein "hot" and "cold" are to be seen as terms, and wherein the medium is hotter in terminal 101a than in terminal 101b. Accordingly, the hot terminal of the primary side of the heat exchanger 104 is the terminal 103b, and the cold terminal is the terminal 103a. On the secondary side of the heat exchangers 102 or 104, the hot terminal is in each case the top terminal and the cold terminal is in each case the bottom terminal in Fig. 5.

On the condenser side of the heat pump 100, the condenser outlet 103b is connected to the "hot" terminal of the heat exchanger 104, and the condenser inlet is connected to the colder end of the heat exchanger 104. Above that, on its other side facing away from the heat pump 100, the heat exchanger is connected to the region to be heated, where a set temperature T should prevail.

If the heat pump is used as a cooling unit, the region to be cooled will, so to speak, be the "effective side". The region to be cooled can, for example, be an indoor room, such as a computer room or another room to be cooled or air-conditioned. Then, the region to be heated would, for example, be the outside wall of a building or a rooftop or another region into which waste heat is to be introduced. If, however, the heat pump 100 is used as heating, the region to be heated will, so to speak, be the "effective side" and the region to be cooled would, for example, be soil, ground water or the like.

In such heat pump applications as shown in Fig. 5, it is problematic that the configuration does not take into consideration that the ambient temperature of the region to be heated, when the same is, for example, outdoors, varies heavily. In winter, temperatures of -20 °Celsius can prevail, and in summer temperatures of over 30 °Celsius. If, for example, an application is considered where a computer room is air-conditioned, it would be sufficient, for the case that the ambient temperature is, e.g., in the range of or below the set temperature in the region to be cooled, to no longer air-condition the computer room at all, but to simply "open the windows". This is, however, problematic, since computer rooms do not necessarily have windows and because, at the same time when such cooling is considered, it is relatively difficult to check that there is a constant temperature in the room, because of the fact that particularly cold zones might possibly form close to the windows, if there are any, while further away from the windows or behind specific racks hot zones form that might not be sufficiently cooled. On the other hand, it is problematic in that, in a heat pump configuration such as is illustrated in Fig. 5, the fact that the ambient temperatures can vary heavily and in particular frequently lie within ranges where cooling is normally not necessitated, is not put to effective use. For that reason, a configuration as illustrated in Fig. 5 is implemented for the worst-case situation, i.e. for example for a very hot summer day, although such a hot summer day is, on average, very rare, at least in Germany, and the main part of the time within one year has temperatures where the necessitated cooling capacity is far below the requested worst-case situation.

DE 10 2012 208 174 A1 discloses a heat pump with a free cooling mode. In the free cooling mode, the evaporator inlet is connected to a return from the region to be heated. Further, the condenser inlet is connected to a return from the region to be cooled. By the free cooling mode, a significant efficiency increase is already obtained, in particular for outside temperatures of less than, for example 22 °C.

However, the free cooling mode also does not obtain the maximum energy-saving potential.

It is the object of the present invention to provide a more efficient heat pump concept. This object is solved by a heat pump according to claim 1, a method for pumping heat according to claim 12 or a heat pump system according to claim 13.

A heat pump according to one aspect includes an evaporator with an evaporator inlet and an evaporator outlet as well as a condenser with a condenser inlet and a condenser outlet. Above that, according to the invention a switching means is provided for operating the heat pump in a first operating mode or a second operating mode. In the first operating mode, the heat pump is completely bypassed in that the return of the region to be cooled is directly connected to the forward of the region to be heated. Above that, in this bypass mode, the return of the region to be heated is connected to the forward of the region to be cooled. Typically, the evaporator is allocated to the region to be cooled and the condenser to the region to be heated.

In the first operating mode or bypass mode, however, the evaporator is not connected to the region to be cooled and further the condenser is also not connected to the region to be cooled, but both regions are, so to speak "short-circuited". In the second alternative operating mode, however, the heat pump is not bypassed but typically operated in the free cooling mode at still relatively low temperatures or in the normal mode. In the free cooling mode, the switching means is configured to connect a return of the region to be cooled to the condenser inlet and to connect a return of the region to be heated to the evaporator inlet. On the other hand, in the normal mode, the switching means is configured to connect the return of the region to be cooled to the evaporator inlet and to connect the return of the region to be heated to the condenser inlet.

Depending on the embodiment, at the output of the heat pump, i.e. on the condenser side, or at the input of the heat pump, i.e. on the evaporator side, a heat exchanger can be provided for decoupling the inner heat pump cycle from the outer cycle with regard to liquids. In that case, the evaporator inlet represents the inlet of the heat exchanger coupled to the evaporator. Above that, in that case the evaporator outlet represents the outlet of the heat exchanger which is again firmly coupled to the evaporator.

Analogously, on the condenser side, the condenser outlet is a heat exchanger outlet and the condenser inlet is a heat exchanger inlet on the side of the heat exchanger which is not firmly coupled to the actual condenser.

Alternatively, however, the heat pump can be operated without a heat exchanger on the input side or on the output side. Then, e.g. at the input into the region to be cooled or at the input into the region to be heated, a heat exchanger could respectively be provided, which then includes the return or forward to the region to be cooled or to the region to be heated.

In preferred embodiments of the present invention, the heat pump is used for cooling, such that the region to be cooled is, for example, a room of a building, a computer room or generally a refrigeration room, while the region to be heated is, for example, a roof of a building or a similar position where a heat dissipation device can be placed in order to dissipate heat to the environment.

If, however, as an alternative, the heat pump is used for heating, the region to be cooled is the environment from which energy is to be drawn and the region to be heated, is the "effective application", i.e. for example the inside of a building, a house or a room to be heated.

Thus, the heat pump according to the first aspect is able to switch from the bypass mode either into the free cooling mode, or if such a free cooling mode is not implemented, into the normal mode.

Generally, the heat pump according to the first aspect is advantageous in that the same becomes particularly efficient when outside temperatures prevail that are, for example, less than 16°C, which is frequently the case, at least in areas of the northern and southern hemisphere distant from the equator.

Thereby, it is obtained that the heat pump can be completely switched off at outside temperatures where direct cooling is possible. In the case of a heat pump with a radial compressor as temperature raiser between the evaporator and the condenser, the radial impeller can be stopped and no more energy has to be supplied to the heat pump. Alternatively, the heat pump can still run in a stand-by mode or the like which, however, causes only little current consumption since the same is only a stand-by mode. In particular in heat pumps without valves, as they are preferably used, a heat short-circuit can be prevented by completely bypassing the heat pump, in contrary to the free-cooling mode.

Above that, it is preferred that in the first operating mode, which according to the invention is in the bypass mode, the switching means separates the return of the region to be cooled or the forward of the region to be cooled completely from the evaporator, such that no liquid connection between inlet and outlet, respectively, of the evaporator and the region to be cooled exists. This complete separation will also be advantageous on the condenser side.

In implementations, a temperature sensor means is provided that detects a first temperature with regard to the evaporator or a second temperature with regard to the condenser. Further, the heat pump has a control that is coupled to the temperature sensor means and is configured to control, in dependence on one or several temperatures detected in the heat pump, the switching means, such that the switching means switches from the first to the second operating mode or vice versa. The implementation of the switching means can be implemented by an input switch and an output switch, each comprising four inputs and four outputs and being switchable depending on the mode. Alternatively, the switching means can also be implemented by several individual cascaded switches, each having an input and two outputs.

Further, as coupling element for coupling the bypass line to the forward into the region to be heated or the coupler for coupling the bypass line to the forward into the region to be cooled, can be configured as a simple three-terminal combination, i.e. as liquid adder. However, in order to have optimum decoupling, it is preferred in implementations to configure the couplers also as switches or integrated in the input switch and output switch, respectively.

According to the invention, as specific temperature sensor, a first temperature sensor is used on the evaporator side and a second temperature sensor is used on the condenser side as second temperature sensor, wherein an even more direct measurement is preferred. The evaporator side measurement is particularly used for performing speed control of the temperature raiser, i.e. a compressor, while the measurement on the condenser side or also a measurement of the environmental temperature, is used for performing mode control, i.e. to switch the heat pump, e.g., from the bypass mode to the free cooling mode when a temperature is no longer in the very cold temperature range but in the medium-cold temperature range. If the temperature is higher, i.e. in a hot temperature range, the switching means will bring the heat pump in a normal mode.

In a two-stage heat pump, in this normal mode, merely a first stage will be active, while the second stage is still inactive, i.e. is not supplied with current and hence necessitates no energy. Only when the temperature rises further, into a very hot range, a second pressure stage will be activated in addition to the first heat pump stage or in addition to the first pressure stage, which again comprises a condenser, a temperature raiser, typically in the form of a radial compressor and a condenser. The second pressure stage can be connected in series or in parallel or in series/parallel to the first pressure stage.

In order to ensure that in the bypass mode, i.e., when the outside temperature is already relatively cold, the cold from the outside does not completely enter the heat pump system and above that into the room to be cooled, i.e. makes the room to be cooled even cooler than it should be, it is preferred to provide, based on a sensor signal at the forward into the region to be cooled or at the return of the region to be cooled, a control signal that can be used by a heat dissipation device mounted outside the heat pump for controlling heat dissipation, i.e. to reduce the same when the temperatures become too cold. The heat dissipation device is, for example a liquid/air heat exchanger having a pump for circulating the liquid introduced into the region to be heated. Further, the heat dissipation device can comprise a fan for transporting air into the air heat exchanger. Additionally or alternatively, a three-way mixer can be provided for partly or completely short-circuiting the air heat exchanger. Depending on the forward into the region to be cooled which, however, in this bypass mode, is not connected to the condenser outlet, but to the return from the region to be heated, the heat dissipation device, i.e., for example the pump, the fan or the three-way mixer is controlled for reducing the heat dissipation further and further so that a temperature level, which may in this case be above the outside temperature level, is maintained both in the heat pump system and in the region to be cooled. Thereby, the waste heat can even be used for heating the room "to be cooled" when the outside temperatures are too cold.

In a further aspect, the entire control of the heat pump is performed such that depending on a temperature sensor output signal of a temperature sensor on the evaporator side, "fine control" of the heat pump is performed, i.e. speed control in the different modes, i.e. for example the free cooling mode, the normal mode with a first stage and the normal mode with a second stage and also control of the heat dissipation device in the bypass mode, while mode switching is performed based on a temperature sensor output signal of a temperature sensor on the condenser side. Thereby, merely based on a condenser side temperature sensor, operating mode switching from the bypass mode into the free cooling mode and/or into the normal mode is performed, wherein for a decision whether switching takes place, the temperature output signal on the evaporator side is not used. However, for speed control of the radial compressor or for controlling the heat dissipation devices, again, merely the temperature output signal on the evaporator side is used, but not the sensor output signal on the condenser side.

It should be noted that the different aspects of the present invention, on the one hand the usage of the bypass mode, on the other hand the control of the heat dissipation device in the bypass mode or free cooling mode and the control of the radial compressor in the free cooling mode or the normal operating mode on the other hand, or also the third aspect of using two sensors, wherein one sensor is used for operating mode switching and the other sensor for fine control, can be used independently of one another. However, these aspects can also be combined in pairs or together.

Advantages of the first aspect are that, when the outside temperatures are cold enough, the heat pump can be completely bypassed and hence has to consume no energy. For obtaining security that the entire system and in particular the region to be cooled do not become too cold, the heat dissipation device is controlled in order to obtain, in a way, "isolation" from the outside world that is too cold.

The second aspect is advantageous in that exactly that insulation from the outside world is obtained independent of whether the heat pump runs in the bypass mode or in the free cooling mode when, for example, only the free cooling mode and the normal mode are implemented but not the bypass mode. Then, typically at low speed of the heat pump which should not be completely switched off for preventing short-circuit within the heat pump, undercooling of the system and region to be cooled can still be prevented.

The third aspect is advantageous in that transparent and efficient control is obtained, obtaining, on the one hand, "coarse control" due to the mode switching and, on the other hand, "fine control" due to the temperature-dependent speed control in that only that much energy is consumed as is actually needed at the time. This procedure where the heat pump is not constantly switched on and switched off, for example in known heat pumps with hysteresis, also ensures that due to the continuous operation no start-up losses occur.

Preferred embodiments of the present invention will be discussed in more detail below with reference to the accompanying drawings. They show:
- Fig. 1: a heat pump according to an embodiment of the present invention with a common implementation of all three aspects;
- Fig. 2: a heat pump according to an embodiment with a configuration of the switching means with individual switches;
- Fig. 3: an illustration of an internal structure of the heat pump of Fig. 1 or Fig. 2;
- Fig. 4: an overview of the different operating modes with temperature ranges and exemplary temperatures;
- Fig. 5: an arrangement of a heat pump system between two heat exchangers;
- Fig. 6: a configuration of the heat pump of Fig. 1 or 2 in the normal operating mode;
- Fig. 7: a parallel connection of two heat pump stages for exemplary implementation of the heat pump of Fig. 1 or Fig. 2;
- Fig. 8A: an embodiment of a heat pump for the second aspect;
- Fig. 8B: a detailed representation of the heat dissipation device and the heat pump of Fig. 8A;
- Fig. 9A: an embodiment of a heat pump with an implementation of three aspects and input/output switches;
- Fig. 9B: an illustration of the mode controls according to the third aspect based on temperature on the condenser side and the temperature on the evaporator side; and
- Fig. 9C: a representation of the input switch and the output switch of Fig. 9A and a table for the switching states for the different operating modes.

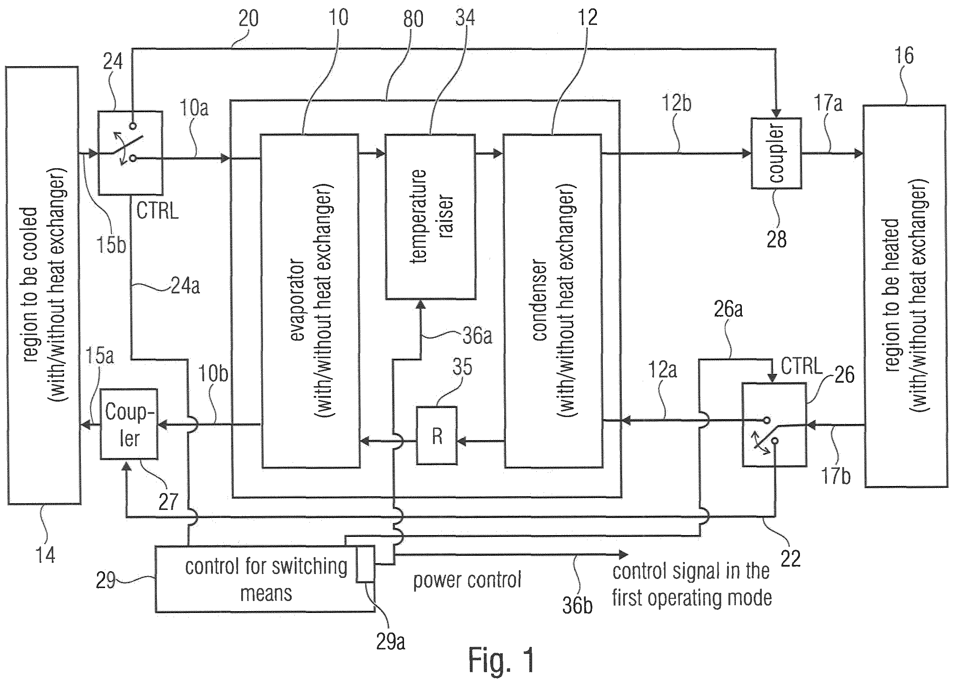

Fig. 1 shows a heat pump according to the present invention having an evaporator 10 comprising an evaporator inlet 10a and an evaporator outlet 10b. Further, the heat pump includes a condenser 12 with a condenser inlet 12a and a condenser outlet 12b. Apart from the switching means that can be implemented by elements 24, 26, 27, 28, the evaporator inlet 10a is connected to a return 15b from a region to be cooled 14. Above that, apart from the coupler 27, the evaporator outlet 10b is connected to a forward 15a into the region to be cooled 14.

On the condenser side, the condenser outlet 12b is connected to a forward 17a, again apart from the coupler 28, to a region to be heated 16. Above that, the region to be heated 16, and in particular its return 17b is, again apart from the switch 26, connected to the condenser inlet 12a. Thus, the heat pump includes a switching means preferably implemented by elements 24, 26, 27, 28 and that is configured to connect, in the first operating mode, a return, namely the return 15b of the region to be cooled 14, to the forward 17a of the region to be heated 17 via a first bypass line 20 and to connect a return 17b of the region to be heated 16 to the forward 15a of the region to be cooled 14 via a further bypass line 22. Further, the heat pump means is configured to connect, in a second operating mode, the return 15b of the region to be cooled 14 to the evaporator inlet 10a (in the normal mode) or the condenser inlet 12a (in the free cooling mode), and to connect the return 17b of the region to be heated 16 to the condenser inlet 12a (in normal operation or normal mode) or the evaporator inlet 10a (in the free cooling mode).

In embodiments, the switching means is configured to separate, in the first operating mode, the return 15b of the region to be cooled 14 or the forward 15a of the region to be cooled from the condenser 10 or its inlet 10a and outlet 10b, respectively, such that no liquid connection exists between the forward 15a and the return 15b of the region to be cooled and the evaporator 10. On the condenser side, the switching means is also preferably configured to completely separate, in the bypass mode, the condenser outlet 12b from the forward 17a into the region to be heated and to further also completely separate, in the bypass mode, the return 17b from the region to be heated 16, i.e. the line 17b from the condenser inlet 12a. This complete separation is obtained, for example by the switches 24, 26 in Fig. 1 that are controlled via a control line 26a and 24a, respectively. The coupler 28 on the condenser side and the coupler 27 on the evaporator side, respectively, do not have to be configured for complete separation but can also be merely a line coupling, i.e. a line coupling having two inputs and one output. However, as mentioned, complete separation is preferred, such that the couplers 27, 28 are also controlled by a control 29 for the switching means.

In specific embodiments, the heat pump includes, apart from the evaporator 10 and the condenser 12, a temperature raiser 34 for raising the temperature in the evaporated operating liquid. The temperature raiser 34 is preferably configured as radial compressor with a radial impeller, but can also be configured as any other temperature raiser such as any other compressor. Above that, the heat pump includes a feedback means R 35 when the heat pump is configured as closed heat pump. If, however, the heat pump is configured as open heat pump, the feedback means R is not absolutely necessitated.

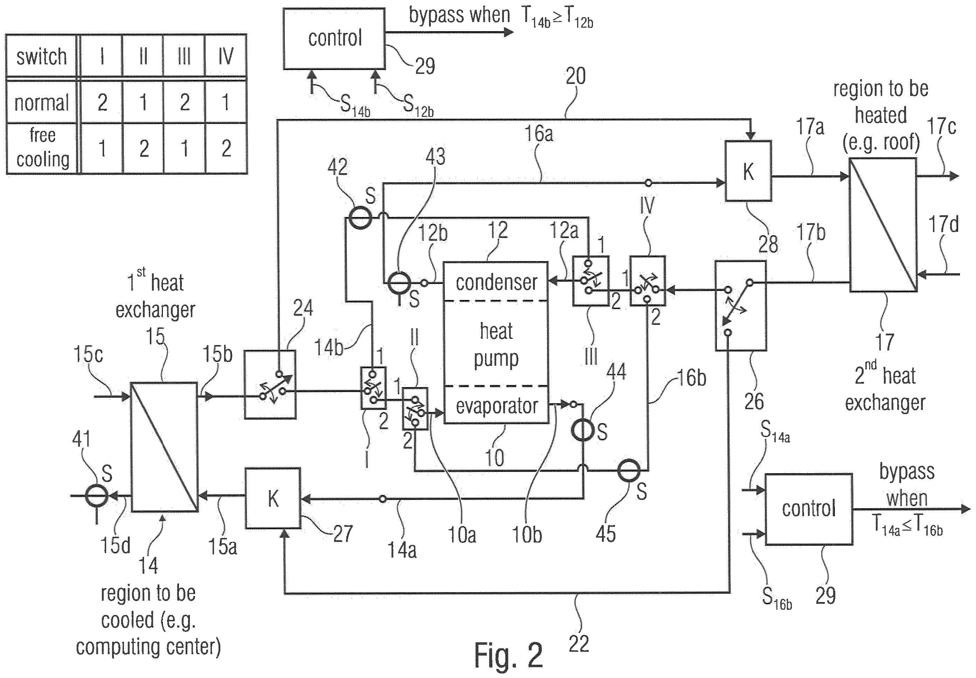

Above that, it should be noted that no further heat exchangers are illustrated in Fig. 1, as they can be used, for example, at the evaporator input 10a, at the condenser output 12b, at the input 15a into the region to be cooled 14 or at the input 17a into the region to be heated 16, wherein heat exchangers are illustrated, for example in Fig. 2 at 15 (heat exchanger on the evaporator side allocated to the region to be cooled 14) or 17 (heat exchanger on the condenser side allocated to the region to be heated 16).

The control 29 for the switching means 24, 26, 28, 27 further comprises a power control unit 29a for providing, on the one hand, a control signal 36a for the temperature raiser and, on the other hand, for providing a control signal 36b for a heat dissipation device. The control signal 36b is preferably provided only in the first operating mode, i.e. in the bypass mode in order to control a heat dissipation device in the region to be heated which is not illustrated in Fig. 1.

Fig. 2 shows a heat pump system with a heat pump and the region to be heated 17 and the region to be cooled 14 and in particular with forward lines to the regions and return lines from the regions.

The heat pump includes the evaporator 10 with the evaporator inlet 10a and the evaporator outlet 10b. Further, the heat pump includes the condenser 12 with the condenser inlet 12a and the condenser outlet 12b. Further, the heat pump typically includes a compressor illustrated at 34 in Fig. 1 for compressing operating liquid evaporated in the evaporator 10, wherein the condenser 12 is implemented to compress the evaporated operating liquid compressed in the compressor. The compressor is preferably implemented as turbo compressor having a typically fast rotating radial impeller to handle the necessitated compressor capacity. An exemplary heat pump is described in EP 2016349 B1.

Above that, the heat pump configuration in Fig. 2 includes forward and return lines, wherein in particular the forward line to the region to be cooled 14 is indicated by 15a, and wherein the return line from the region to be cooled 14 is indicated by 15b. Further, the region to be heated 16 is allocated to the heat pump, which again comprises the forward line 17a and the return line 17b. Above that, in one embodiment of the invention, the heat exchanger 15 is allocated to the region to be cooled 14, and the heat exchanger 17 is allocated to the region to be heated. Both heat exchangers 15, 17 each have again a primary side directed towards the heat pump, and a secondary side facing away from the heat pump, i.e. to the region to be cooled in the case of the heat exchanger 15 and the region to be heated in the case of the heat exchanger 17. The primary side of the heat exchanger 15 includes the hot terminal 15b representing the return from the region to be heater, and includes the cold terminal 15a representing the forward 15a to the region to be cooled. On the secondary side, the heat exchanger further includes a hot terminal 15c and a cold terminal 15d.

Accordingly, the heat exchanger 17 allocated to the region to be heated again includes a hot terminal 17a representing the forward 17a of the region to be heated, and a cold terminal 17b representing the return 17b of the region to be heated 16. On the secondary side, the heat exchanger 17 again includes a hot terminal 17c and a cold terminal 17d. It should be noted that the heat exchangers are not absolutely necessitated. Instead, the operating liquid can also be guided directly into the region to be heated or into the region to be cooled, wherein, however, there will always be a forward and a return into or from the region to be heated or to be cooled. It should be noted that the terms "hot" and "cold" should be seen as designations, wherein, however, it should be noted that the liquid in the hot terminal is hotter than the cold terminal. Thus, the hot terminal of the primary side of the heat exchanger 15 is the terminal 15b and the cold terminal is the terminal 15a.

Fig. 2 further shows a first connecting line 14a arranged between the evaporator 10 and the coupler 27. A second connecting line 14b is arranged between an evaporator switch comprising switches I and II and a condenser switch comprising switches III and IV. The second connecting line 14b is connected to a first input 1 of the first switch I and a first input 1 of the third switch III.

Fig. 2 further shows a third connecting line 16a arranged between the condenser 12 and the coupler 28. A fourth connecting line 16b is arranged between a condenser switch comprising switches III and IV and an evaporator switch comprising switches I and II. The fourth connecting line 16b is connected to a second input 2 of the fourth switch IV and a second input 2 of the second switch II.

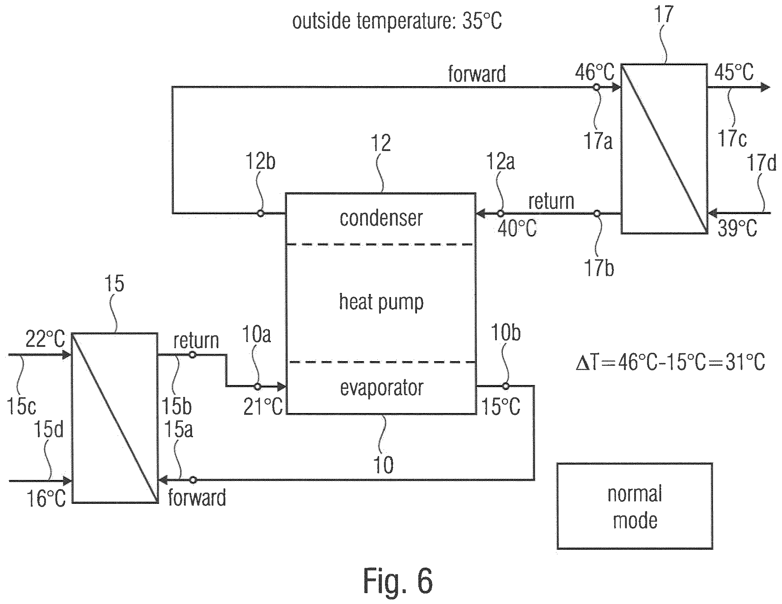

Fig. 2 further shows various temperature specifications at the respective terminals. Thus, in the embodiment shown in Fig. 2, it is assumed that the temperatures of the heat exchanger 17 or its secondary side, i.e. for example 23 °Celsius and 17 °Celsius, are obtained when the air has a temperature of, e.g. 13 °Celsius. Here, the secondary circuit with terminals 17c, 17d of the heat exchanger 17 could be connected to a fan blowing the ambient air having, for example, 13 °Celsius, through a radiator, whereby the liquid is cooled from 23 °Celsius to 17 °Celsius. On the primary side of the heat exchanger 17, this means that the forward has a temperature of 24 °Celsius and the return a temperature of 18 °Celsius. Since the temperature of 18 °Celsius is already within the order in which the evaporator is normally "fed", according to the invention, the return of the heat exchanger 17 or the return from the region to be heated is fed into the evaporator inlet. The evaporator obtains cooling down by 3 °Celsius at the evaporator outlet and thus obtains a temperature of 15 °Celsius, which is suitable for reaching a respective set temperature in the region to be cooled which is, for example, 22 °Celsius. This temperature can be found at the hot terminal of the secondary side of the heat exchanger 15 allocated to the region to be cooled, and reflects the situation where the object to be cooled has output so much energy to the medium that the cooling agent has warmed up from 16 °Celsius to 20 °Celsius. Due to the heat exchanger, this means that the hot terminal of the heat exchanger of the region to be cooled has a temperature of 21 °Celsius. Contrary to the standard configuration where the return is coupled to the evaporator, the return is now coupled to the condenser inlet 12a, and the water which is preferably used as cooling agent is heated to 24 °Celsius in the condenser due to the heat pump operation, and this energy is then dissipated via the region to be heated or the heat exchanger 17. It is decisive that the temperature difference prevailing between the evaporator outlet 10b and the condenser outlet 12b is now merely 9 °Celsius. This is a low temperature difference compared to the normal operation which is indicated in Fig. 6 and which amounts to, for example, 31 °Celsius. According to the invention, the lower ambient temperature is used by the specific wiring such that a low temperature difference is obtained for the heat pump. Since the temperature difference, contrary to the passage, enters the power consumption of the heat pump in a square manner (the passage enters only in a linear manner), any reduction of the temperature difference to be provided by the heat pump results in significant power savings and hence in an efficiency increase.

In a preferred embodiment of the present invention, the configuration of the heat pump is implemented in a switchable manner. For this, a switching means is provided that is configured to separate the evaporator inlet 10a from the return 17b from the region to be heated 16 and from the fourth connecting line 16b, and to couple the return 15b from the region to be cooled to the evaporator inlet 10a. In the embodiment shown in Fig. 2, this functionality is obtained by the two switches I and II representing an evaporator switch. Further, the switching means is configured to separate the condenser inlet 12a from the return 15b from the region to be cooled 14 and from the second connecting line 14b, and to couple the return 17b from the region to be heated 16 to the condenser inlet 12a. This functionality is obtained in the embodiment shown in Fig. 2 by the two switches III and IV representing the evaporator switch.

The switch positions of switches I, II, III, IV are illustrated for the two variations, i.e. the free cooling mode as shown in Fig. 2 and the normal operating mode as shown in Fig. 6. In normal mode, switch I is at position 2, switch II is at position 1, switch III is at position 1 and switch IV is at position 1. In contrast, in the free cooling mode, switch I is at position 1, in the free cooling mode, switch II is at position 2, in the free cooling mode, switch III is at position 1, and in the free cooling mode, switch IV is at position 2. With respect to the circulation of liquids, the free cooling mode is as illustrated in Fig. 1, and with respect to the circulation, the normal operating mode is as illustrated in Fig. 6. This means in the embodiment shown in Fig. 6, based on assumed realistic ambient temperatures in the summer of 35 °Celsius, that the liquid in the cold terminal 17d of the secondary side of the heat exchanger for the region to be heated has a temperature of 39 °Celsius and is heated up to 45 °Celsius due to the heat exchanger effect. On the primary side of the heat exchanger 17, this means that the forward has a temperature of 46 °Celsius and the return a temperature of 40 °Celsius. However, on the evaporator side, as in the embodiment shown in Fig. 2, the secondary side of the heat exchanger 15 has the same set temperatures as in Fig. 2, and the primary side also has the same set temperatures. However, this means that the heat pump with the evaporator 10 and the condenser 12 has to overcome a significant temperature difference in the normal operating mode, i.e. 31 °Celsius when the ambient temperature has an assumed maximum of, e.g., 35 °Celsius.

In preferred embodiments of the present invention, as shown in Fig. 2 by the control 20, reconfiguration is performed depending on the temperature in the region to be heated, i.e. e.g. on the ambient temperature on a roof or on a facade of a building. If, in preferred embodiments of the present invention, the ambient temperature is less than or equal to 18 °Celsius, and in particular less than or equal to 16 °Celsius, the control can control switches I, II, III, IV such that the free cooling mode of Fig. 2 becomes active, while the normal mode will be controlled when the temperatures are above that. Thus, depending on the implementation, the normal mode can already be activated starting from 16 °Celsius ambient temperature, and, depending on the implementation, also, for example, already starting from 18 °Celsius ambient temperature. The exact switching temperature depends in particular also on the implementation of the system and also on the implementation of the heat exchangers or whether heat exchangers are used at all. Further, it is also significant how strongly the heat transfer takes place from the ambient temperature into the secondary side of the heat exchanger 17 or, when no heat exchanger is used, into the forward and return 17a, 17b.

Switching can also take place in a manual or time-controlled manner or by a combination of the stated measures. Manually operated switching can be performed by an operator of the plant, who receives the suggestion to reconfigure, for example by any type of display. Alternatively, switching can also take place in a time-controlled manner, for example such that the plant is operated in the free cooling mode in winter, in the normal operating mode in summer, in the normal operating mode during the day in spring and autumn, and in the free cooling mode at night. Alternatively, the temporal condition and the temperature condition can be combined to control automatically or to give the operator an optimum suggestion for the configuration of the heat pump system.

In the following, the individual switches in Fig. 2 will be discussed in more detail. The switch I includes an input connected to the hot terminal of the primary side of the first heat exchanger 15. Further, the switch includes two outputs, wherein the first output is connected to a first input of the switch III via the second connecting line 14b, and wherein the second output is connected to a first input of the switch II. The switch I can be controlled by the control 20 such that the input is either connected to the first output or to the second output.

The switch II includes a single output connected to the evaporator inlet 10a. Above that, switch II includes two inputs, wherein the first input is connected to the second output of the switch I, and wherein the second input is connected to the second output of the switch IV via the fourth connecting line 16b. Again, the control 20 can control, for example electrically or mechanically or in any other way, the switch II such that the output is either connected to the first input or to the second input.

The switch III again comprises two inputs and one output. The output of the switch III is connected to the condenser inlet 12a. The first input is connected to the first output of the switch I via the second connecting line 14b, and the second input is connected to a first output of the switch IV. Again, the control 20 is implemented to activate the switch III, for example electrically or in any other way, such that either the first input or the second input is connected to the output of the switch and hence to the condenser inlet 12a.

The switch IV includes a single input connected to the cold terminal 17b of the heat exchanger 16 and in particular its primary side, while a first output of the switch IV is connected to a second input of the switch III, while the second output of the switch IV is connected to the second input of the switch II via the fourth connecting line 16b. Again, the control 20 is implemented to activate the switch IV, for example electrically or in any other way, such that the input is either connected to the first output or to the second output. In particular, it is preferred to form or couple the connections in a pressure-tight and liquid-tight manner, wherein respective liquid switches are known in the art and typically have three pipe terminals towards the outside, by which the switches can be coupled to the other respective terminals via pipes, preferably plastic pipes, in a pressure-and liquid-tight manner.

The first connecting line 14a connects the evaporator outlet 10b to a first input of the coupler 27 on the evaporator side and the third connecting line 16 connects the condenser outlet 12b to an input of the coupler 28 on the evaporator side.

While so far, with reference to Fig. 2, switching between the free cooling mode and normal mode has been described, switching from normal mode or free cooling mode to the bypass mode will now be described. After switches 24 and 26 have so far not been in the bypass mode, i.e. the bypass lines 20 and 22 have been deactivated, the same are now active. Thereby, the return 15b of the region to be cooled 14 is now directly connected to the forward 17a of the region to be heated 17. Accordingly, the bypass line 22 is also active, such that the return of the region to be heated 16, i.e. 17b is connected to the forward 15a into the region to be cooled 14 via the bypass line 22.

Above that, several temperature sensors 41, 42, 43, 44, 45 are shown. Depending on the implementation, switching between the free cooling mode and the bypass mode, in particular switching into the bypass mode is performed by the control 29 when the temperature of the sensor 42, i.e. T_{14b} is greater than the temperature of the sensor 43, i.e. T_{12b}.

A respective control can also be performed based on the two sensors 44 and 45 in that the temperature output signals of the sensor 45, i.e. S_{16b} and the sensor 44, i.e. S₁₄ₐ are fed into the control 29, are compared there and that then switching into the bypass mode is performed when the temperature of the sensor 44 is lower than or equal to the temperature of the sensor 45.

Switching into the bypass mode preferably takes place when either the one condition or the other condition or both conditions are fulfilled. The output signals of the two controls 29 shown in Fig. 2 can, for example, be connected by an OR connection in order to determine by the control 29 whether switching into the bypass mode or short-circuit mode between a region to be heated and a region to be cooled has to take place or not.

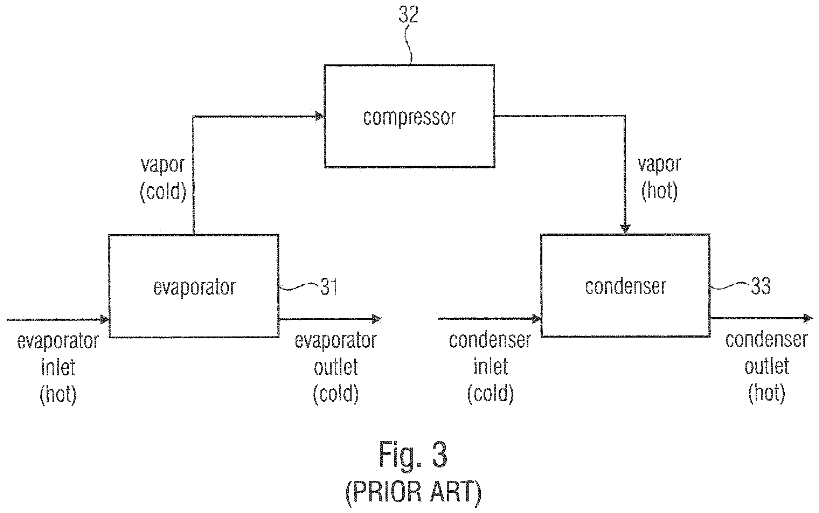

Fig. 3 shows an implementation of a heat pump stage, in particular the structure of a heat pump unit of which one or several can exist in a heat pump stage. A heat pump unit consists of an evaporator 31, a compressor 32 and a condenser 33. The evaporator 31 includes an evaporator inlet for introducing the ("hot") operating medium to be evaporated, and further includes an evaporator outlet for letting out the ("cold") evaporating medium.

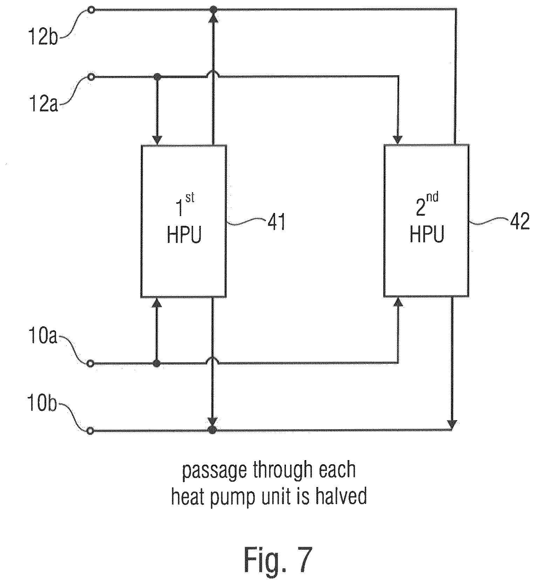

Accordingly, the condenser 33 includes a condenser inlet for introducing the "cold" operating medium and for letting out the "hot" operating medium, wherein the media in the evaporators 31 and 33 are liquids. Above that, by the heat pump process, "cold" vapor from the evaporator 31 is compressed by the compressor 32 and heated, and the "hot" vapor is then fed into the condenser 33, so that the "hot" vapor condenses and the liquid in the condenser 33 which is then let out through the condenser outlet, is heated by the "hot" vapor due to the condensation process. When a heat pump stage merely comprises one heat pump unit shown in Fig. 3, the inlets and outlets illustrated in Figs. 1 and 2 correspond to the inlets and outlets of Fig. 3. Thus, each heat pump stage can also comprise an interconnection of individual heat pump units, such as the two heat pump units 41, 42 in Fig. 7. With respect to the designation of the inflows for the evaporator and the condenser or the outflows for the evaporator and the condenser, it has been assumed that the heat pump in Fig. 1 consists of a parallel connection of two heat pump units 41, 42 of Fig. 7.

Fig. 1 shows the temperature raiser 34 controlled by the control 29 via the control line 36a. The heat pump in particular is configured to supply the temperature raiser 34 with a second power in the second operating mode, i.e. the free cooling mode or the normal mode, and to supply, in the first operating mode, i.e. the bypass mode, the temperature raiser 34 with no power or with an "idle" power which is at least less than 10 % of the second power. Thereby, it is ensured that optimum efficiency and energy savings, respectively, is obtained. In particular, the evaporator 10, the condenser 12 and the temperature raiser 34 are configured without valves for obtaining a simple and again efficient structure. Even when the heat pump operates in the idle mode or is completely deactivated, the occurring temperature short-circuit does not result in a failure since in the first operating mode, where such a temperature short-circuit is obtained, the heat pump is bypassed anyway by the bypass lines 20, 22 and the switches 24, 26.

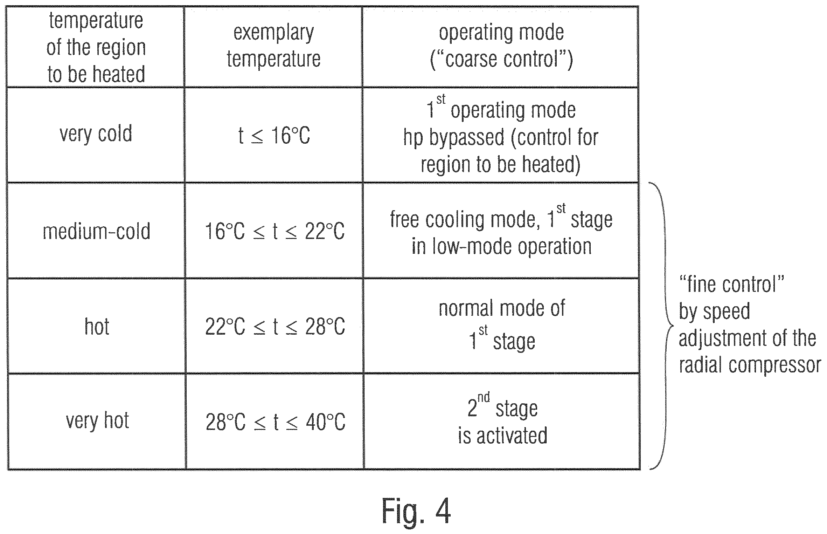

Fig. 4 shows an overview of different modes in which the heat pump according to Fig. 1, Fig. 2, Figs. 8A, 9A can be operated. If the temperature of the region to be heated is very cold, such as less than 16 °C, the operating mode selection will activate the first operating mode where the heat pump is bypassed and the control signal 36b for the heat dissipation device is generated in the region to be heated 16. If the temperature of the region to be heated, i.e., the region 16 of Fig. 1 is, in a medium-cold temperature range, for example in a range between 16 °C and 22 °C, the operating mode control will activate the free cooling mode in which, due to the lower temperature spread, the first stage of the heat pump can operate in a low power mode. If, however, the temperature of the region to be heated is in a hot temperature range, i.e. for example between 22 °C and 28 °C, the heat pump will operate in a normal mode, but in the normal mode with a first heat pump stage. If, however, the outside temperature is very hot, i.e. in a temperature range between 28 °C and 40 °C, the second heat pump stage is activated, which also operates in the normal mode and supports the already running first stage.

Preferably, speed control and "fine control", respectively, of a radial compressor is performed within the temperature raiser 34 of Fig. 1 in the temperature range "medium-cold", "hot", "very hot" in order to operate the heat pump always only with the heat/cold power currently required by the actual conditions.

Mode switching is preferably controlled by a temperature sensor on the condenser side, while fine control or the control signal for the first operating mode depends on a temperature on the evaporator side.

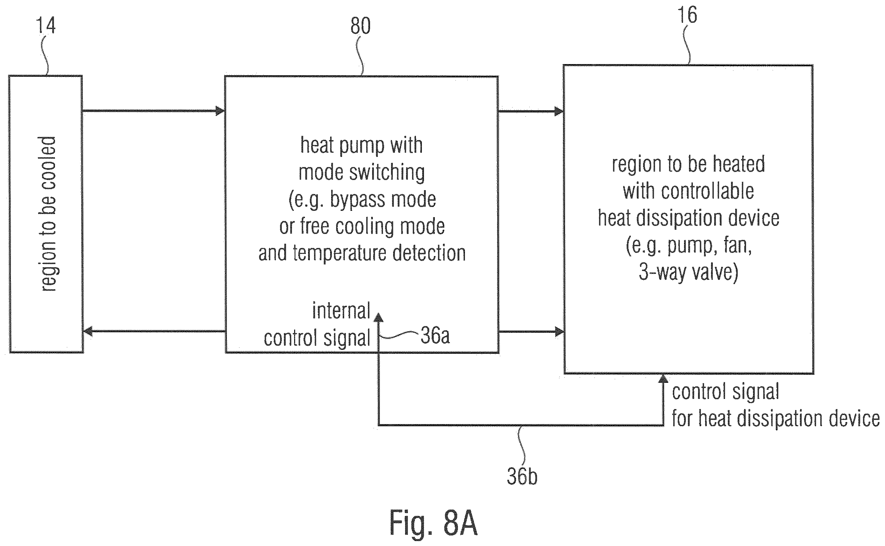

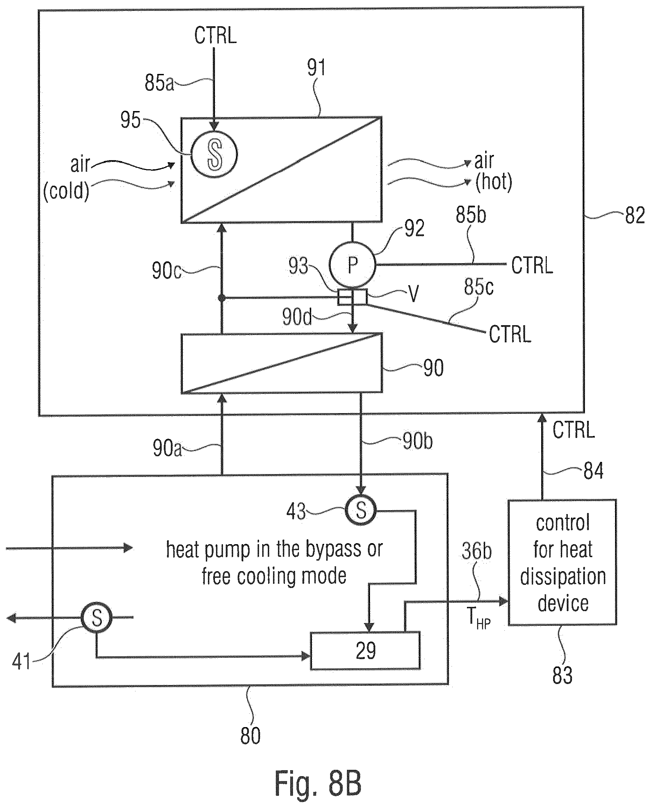

Fig. 8 shows a heat pump system similar to the system of Fig. 1, again with the region to be cooled 14, a heat pump 80 with mode switching, e.g. a bypass mode, a free cooling mode or a normal mode and a temperature sensor.

Further, the region to be heated 16 is provided, which is coupled to the heat pump 80.

Similar to the heat pump 80 in Fig. 1, the heat pump includes the evaporator with the evaporator inlet 10a and the evaporator outlet 10b. Further, a condenser 12 with the condenser inlet 12a and the condenser outlet 12b is provided. Above that, the heat pump includes the temperature raiser 34 for raising a temperature of an operating liquid evaporated by the condenser.

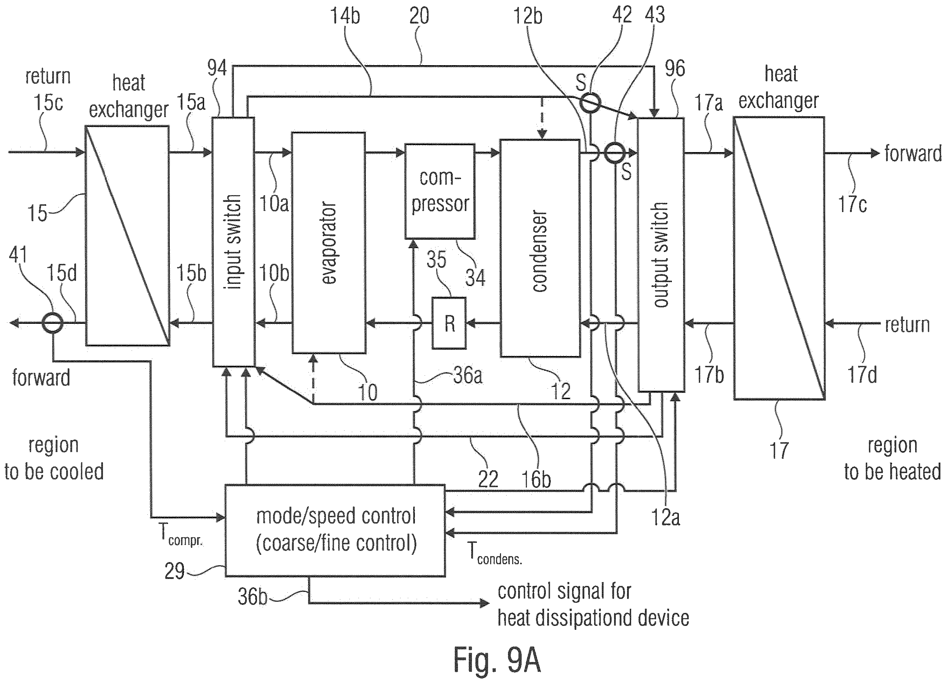

Above that, the switching means implemented by elements 24, 28, 26, 27 of Fig. 1 or for example implemented by the input switch 94 and the output switch 96 of Fig. 9A is provided. The switching means is configured to switch the heat pump between the first operating mode and the different second operating mode, wherein the first operating mode includes a free cooling mode or a bypass mode and wherein the second operating mode includes the free cooling mode or the normal mode. If the first operating mode is the bypass mode, the second operating mode is the free cooling mode or the normal mode. If the first operating mode, however, is already the free cooling mode, the second operating mode is the normal mode.

Further, the heat pump 80 includes temperature sensor means which can include, for example, one or several of the sensors 41, 42, 43, 44, 45 as shown in Fig. 2. The temperature sensor means is configured to detect a temperature at the evaporator (for example sensors 41, 44) or to detect a temperature at the condenser corresponding, for example to the temperature sensors 42, 43, 45. Above that, a control is provided, for example the control 29 of Fig. 1 for providing a control signal based on the detected temperature. Particularly, the control is configured to provide, in the second operating mode, i.e. when the heat pump is operated in the second operating mode, the control signal to the temperature raiser 34, as shown at 36a, or which is referred to in Fig. 8A in block 80 as "internal control signal". If, however, the heat pump is operated in the first operating mode, the control signal that is provided to the control signal output 36b shown in Fig. 1 and also in Fig. 8A based on the temperature. The control signal output 36b can be connected to a control input of a heat dissipation device when the heat pump is operated in the first operating mode. Such a heat dissipation device is shown, for example at 82 in Fig. 8B.

In the embodiment shown in Fig. 8B, the heat dissipation device 82 includes an input heat exchanger 90, an air/liquid/heat exchanger 91, a pump 92 and a 3-way mixer and a 3-way valve 39, respectively. On the input side, the heat exchanger 90 is connected to the heat pump at an input 90a. Above that, the heat exchanger 90 is provided with a heat exchanger output 90b which is also connected to the heat pump 80. Additionally, the heat exchanger 90 has a further heat exchanger output 90c to the further heat exchanger 91 and a further input 90d from the 3-way valve 93.

In the first mode, when the first operating mode is the bypass mode, the input 90a into the heat dissipation device 82, i.e. into the region to be heated is directly connected to the return from the region to be cooled via the switching means of the heat pump, as shown, for example in Fig. 2. If, however, the first operating mode is the free cooling mode, then the heat pump output 90a, which is at the same time the input into the heat exchanger 90, is connected to the condenser output 12b.

In the embodiment shown in Fig. 8B, the temperature sensor means includes the temperature sensor 41 that is shown at the same position as illustrated in Fig. 2.

Depending on the temperature signal at the temperature sensor 41, a control indicated by 92 in Fig. 8B provides the control signal 36b, which is, in the embodiment shown in Fig. 8B, fed into an individual control 83 for the heat dissipation device 82. Preferably, the control signal 36b is provided by the control 92 of the heat pump 80 such that the same can be fed indirectly into a control input 84 of the heat dissipation device, which is, although not shown in Fig. 8B, connected to a control input 85 of a controllable fan 95 which is part of the liquid/air-heat exchanger 91. Alternatively or additionally, the control signal can be fed into a control input 85b of the pump 92 or into the control input 85c of the 3-way valve.

It should be noted that the pump 92 can alternatively also be used in the forward, i.e. in the line 90c or that also an additional (controllable) pump can be used in the line 90c in addition to the pump 92.

If the sensor 41 in the heat pump 80 determines that the liquid in the forward into the region to be cooled 14 is colder than a set value, the heat dissipation device 82 is controlled such that at least the return from the region to be heated via the line 90b becomes hotter. For that, the speed of the pump 92 can be reduced. Alternatively or additionally, the speed of the fan 95 can also be reduced. Alternatively or additionally, the 3-way valve can be controlled such that a greater portion of the agent fed into the heat exchanger 90 via the input 90d originates directly from the output 90c and less agent originates from the heat exchanger 91. It should be noted that it is sufficient that in the heat dissipation device merely either the fan or the pump or the 3-way valve exist and are controlled, respectively. Already one controllable element influencing the heat dissipation and influencing the temperature of the return 90b of the heat exchanger 90, respectively, is sufficient to obtain the desired functionality, i.e. that when it becomes too cold in the region to be heated, this coldness does not enter directly into the heat pump and then into the region to be cooled in the bypass mode or in the free cooling mode. Both in the bypass mode and possibly in the free cooling mode, the output signal of the sensor 41 can additionally be used for controlling the temperature raiser such that when the temperature raiser is constructed as radial compressor with a radial impeller, the speed of the radial impeller is increased or reduced, respectively, depending on the requirements.

In one implementation, the control 29 is configured to compare a temperature of the temperature sensor means, for example of the temperature sensor 41 or a temperature sensor 43, to a set temperature, such that by the control signal, the speed of the radial compressor is increased or reduced depending on a deviation of the temperature from the set value. Preferably, a linear continuous control is used, wherein, however, increments of less than 5 % of the entire speed stroke also allow very fine control and can be used.

Alternatively, the speed of the radial compressor in the temperature raiser 34 can also be controlled by a temperature on the condenser side, such as for example the sensor 43 in Fig. 8B. In particular, the sensor 41 allows a two-fold application. In the normal mode, the same controls the speed of the radial impeller in the radial compressor while the same controls the heat dissipation device 82 in the bypass mode when the radial compressor is deactivated. Depending on the implementation, in the free cooling mode also exclusively the radial impeller can be controlled or also, as far as it is necessitated, the heat dissipation device can be controlled in addition to the control of the radial impeller.

The control of the individual elements in the heat dissipation device 82 preferably takes place proportionally or indirectly proportionally, depending on the control characteristic. Above that, continuous control or again discrete control is performed, but in increments that are each less than 5 % of the entire control strokes.

Fig. 9A shows a further embodiment of a heat pump where the heat exchanger 50 at the end of the heat pump on the evaporator side as well as the heat exchange 17 at the end of the heat pump on the condenser side are part of the heat pump, such that the return from the region to be cooled is the terminal 15c of the heat exchanger 15 and the forward into the region to be cooled is the terminal 15d of the heat exchanger 15. Above that, the forward into the region to be heated is the terminal 17c of the heat exchanger and the return from the region to be heated is the terminal 17d of the heat exchanger. Thus, the heat exchangers 15 and 17 provide the outer terminal region for the heat pump. Above that, input switches 94 are connected between the heat exchangers and the actual evaporator and the actual condenser 12, respectively, as shown in Fig. 9A. Further, the control 29 is provided to perform, in dependence on various temperature signals, such as an evaporator temperature signal provided by the sensor 41, fine control of the compressor 36a and the heat dissipation device, respectively, via the control signal 36b in the free cooling mode on the one hand and in the normal mode on the other hand with respect to the bypass mode on the other hand. Above that, the control 29 receives a condenser-side sensor signal, for example from the sensors 42, 43. The sensor 43 is arranged in the condenser outlet 12d, while the sensor 42 in the free cooling mode represents the condenser inlet.

The input switch 94 and the output switch 96 fulfill the functionalities of the bypass elements 24, 26, 27, 28 of Fig. 2 or Fig. 1 as well as the switches I, II, III IV of Fig. 2, such that the heat pump shown in Fig. 9A can also run in the bypass mode, in the free cooling mode and in the normal mode with one or two stages, especially since the inner heat pump symbolically illustrated by the evaporator 10, the compressor 34, the condenser 12 and the feedback element 35 can consist of two or several connectable stages.

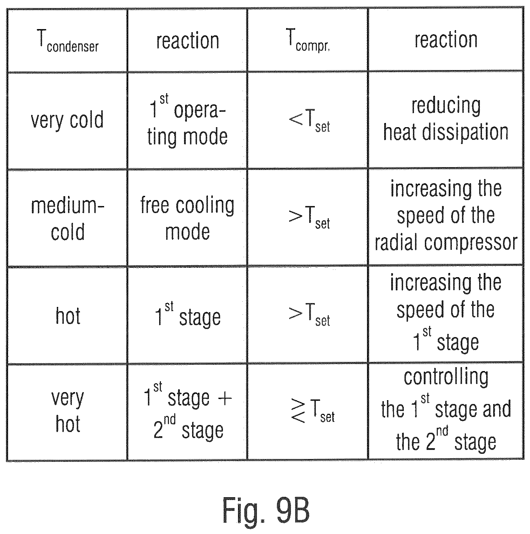

This is shown in tabular form in Fig. 9B. If the condenser temperature is within a very cold temperature range, as a response, the first operating mode is set by the control 29. If it is determined in that mode that the evaporator temperature is lower than a set temperature, reduction of the heat dissipation is obtained by the control signal 36b in the heat dissipation device shown in Fig. 8B. If the condenser temperature is in the medium-cold range, as a response, switching into the free cooling mode by the control 29 is to be expected. If the evaporator temperature is greater than a set temperature, this results, as a response, in an increase of the speed of the radial compressor via the control line 36a. If it is again determined that the condenser temperature is in a hot temperature range, as a response, the first stage is set into normal operation. If it is again determined that at a specific speed of the compressor the evaporator temperature is still greater than a set temperature, this results in an increase of the speed of the first stage, again via the control signal 36a. If it is finally determined that the condenser temperature is in a very hot temperature range, as a response, a second stage is connected in the normal operation. Depending on whether the evaporator temperature, i.e. for example the temperature at the sensor 41 in Fig. 9A is greater or lower than a set temperature, control of the first and/or second stage is performed in order to respond to a changed situation.

It should be noted that the temperature ranges "very cold", "medium cold", "hot", "very hot" represent different temperature ranges whose respective average temperature rises from very cold to medium-cold, to hot, to very hot. The ranges can be directly adjacent as illustrated based on Fig. 4. In embodiments, however, the ranges can also overlap and can be at the stated temperature level or another temperature level that is all in all higher or lower. Further, the heat pump is preferably operated with water as operating agent. Depending on the requirements, other agents can be used.

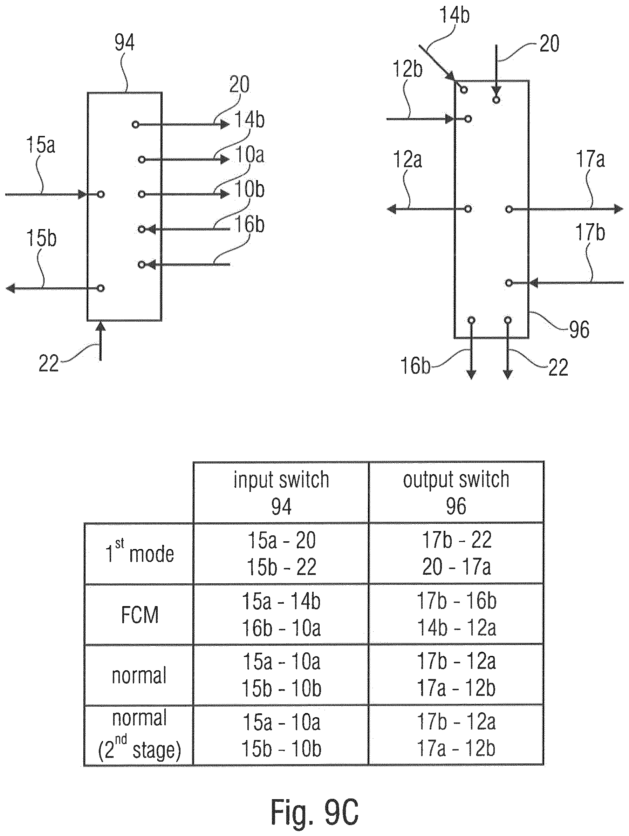

Fig. 9C shows a detailed illustration of switches 94 and 96 with the respective inputs/outputs as illustrated in the overall context in Fig. 9A.

The table in Fig. 9C shows which inputs are in the respective modes with which outputs in the respective switches.

In particular, the input switch 94 includes a first input 15a, a second input 22, a third input 16b (corresponding to the fourth connecting line 16b of Fig. 2) and a fourth input 10b. Above that, the input switch also includes four outputs, namely the first output 20, the second output 14b (corresponding to the second connecting line 14b of Fig. 2), the third output 10a and the fourth output 15b.

The output switch again includes a first input 17b, a second input 20, a third input 14b (corresponding to the second connecting line 14b of Fig. 2) and a fourth input 12b and again a first output 22, a second output 16b (corresponding to the fourth connecting line 16b of Fig. 2), a third output 12a, and a fourth output 17a.

In the bypass mode, the input switch is switched such that the first input is connected to the first output (15a-20). Further, the fourth output 15b is connected to the second input 22 (15b-22).

With regard to the output switch 96, the first input is connected to the first output (17b-22). Further, the second input 20 is connected to the fourth output 17a (20-27a).

In the free cooling mode, the following connections exist in the input switch. The first input is connected to the second output 14b (15a-14b) and the third input 16b is connected to the third output 10a (16b-10a). In the output switch 96, again, the first input 17b is connected to the second output 16b and further, the third input 14b is connected to the third output 12a.

In the normal mode again, in the input switch 94, the first input is connected to the third output (15a-10a). Above that, the fourth output 15b is connected to the fourth input 10b (15b-10b). In the output switch 96 again, in the normal mode, the first input 17b is connected to the third output 12a and further, the fourth output 17a is connected to the fourth input 12b (17a-12b).

In the normal mode where a second stage is activated, the connections are identical as illustrated in the last line of Fig. 9C.

The respective connection in the switches 94, 96 can be implemented, for example as in Fig. 2 with simple switches that are arranged in a cascaded manner or by a more flexible "switching matrix" in order to obtain the necessitated liquid connection of a respective input to a respective output and to prevent liquid connection between the other inputs/outputs.

The heat pump shown in Fig. 9A implements all three aspects, namely on the one hand the aspect of switching between the bypass mode and the free cooling mode or normal mode. The heat pump in Fig. 9A also implements the second aspect, namely the double usage of the temperature sensor on the evaporator side on the one hand, in the bypass mode, for heat dissipation device control, and, on the other hand, in the free cooling and in particular the normal mode for compressor control. The heat pump in Fig. 9A also implements the third aspect, namely the usage of two different temperature sensors, namely the "bottom" temperature sensor close to the evaporator whose output signal is merely used for controlling the compressor on the one hand or the heat dissipation device on the other hand, but does not affect any mode switching. In contrast, temperature measurements on the condenser side, such as by the sensors 42, 43 is used for obtaining mode switching, wherein, however, the output signals of these sensors do not obtain any compressor control and heat dissipation control in the heat dissipation device, respectively.

The three stated inventive aspects can be used together as shown in Fig. 9A. The aspects can however also be used individually or in pairs.

Although specific elements are described as device elements, it should be noted that this description can equally be considered as a description of steps of a method and vice versa. For example, the block diagram shown in Figs. 1 to 3, 5, 6, 7, 8, 9 also represents a flow diagram of a respective inventive method.

Further, it should be noted that the control, for example the control 29 of Figs. 1, 2, 9A can be implemented as software or hardware, wherein the instructions of the table in Fig. 9B or Fig. 4 can be implemented in software or hardware. The implementation of the control can be performed on a non-volatile memory medium, a digital or other memory medium, in particular a disc or a CD with electronically readable control signals, that can cooperate with a programmable computer system such that a respective method for pumping heat and for operating a heat pump, respectively, is performed.

## Claims

1. Heat pump, comprising:
an evaporator (10) with an evaporator inlet (10a) and an evaporator outlet (10b);
a temperature raiser (34) for raising a temperature of an evaporated operating liquid;
a condenser (12) for condensing an evaporated operating liquid with raised temperature;
a temperature sensor means (41, 42, 43, 44, 45) with a first temperature sensor (41, 44, 45) for detecting a temperature with regard to the evaporator (10) and with a second temperature sensor (42, 43) for detecting a temperature at the condenser (12);
a switching means (24, 26, 27, 28, 94, 96) wherein the switching means (24, 26, 27, 28, 94, 96) is configured to operate the heat pump in a first operating mode or a different second operating mode, wherein the first operating mode is a bypass mode and wherein the second operating mode is a normal mode,
wherein the switching means (24, 26, 27, 28, 94, 96) is configured to connect, in the bypass mode, a return (15b) of a region to be cooled (14) to a forward (17a) of a region to be heated (16) and to connect a return (17b) of the region to be heated (16) to a forward (15a) of the region to be cooled (14); and
a control means (29) for controlling the switching means (24, 26, 27, 28, 94, 96) so that the switching means (24, 26, 27, 28, 94, 96) operates in the first operating mode or the second operating mode based on an output signal of the second temperature sensor (42, 43) and for controlling the temperature raiser (34) based on an output signal of the first temperature sensor (41, 44, 45).

2. Heat pump according to claim 1,
wherein the control means (29) is configured to perform a control of the switching means (24, 26, 27, 28, 94, 96) independent of the output signal of the first temperature sensor (41, 44, 45), or wherein the control means (29) is configured to perform a control of the temperature raiser (34) independent of the output signal of the second temperature sensor (42, 43).

3. Heat pump according to claim 1 or 2,
wherein the control means (29) is further configured to provide a control signal (36a) based on the detected temperature to the temperature raiser (34) when the heat pump is operated in the second operating mode, and to provide a control signal (36b) based on the detected temperature to a control output that can be connected to a control input of a heat dissipation device (82) when the heat pump is operated in the bypass mode.

4. Heat pump according to claim 3,
wherein the temperature raiser (34) comprises a radial compressor with a radial impeller with controllable speed, wherein the control means (29) is configured to control the speed of the radial impeller by the control signal (36a) when the heat pump is operated in the second operating mode.

5. Heat pump according to claim 4,
wherein the control means (29) is configured to compare the temperature of the temperature sensor means (41, 42, 43, 44, 45) to a set temperature and to increase or lower the speed by the control signal (36a) in dependence on a deviation of the temperature from the set temperature.

6. Heat pump according to claim 4,
wherein the temperature sensor means (41, 42, 43, 44, 45) is configured to detect the temperature with regard to the evaporator (10) and wherein the control means (29) is configured to increase the speed of the radial impeller by the control signal (36a) in the second operating mode when the temperature is higher than a set temperature and to lower the speed of the radial impeller in the second operating mode when the temperature is lower than a set temperature, or
wherein the temperature sensor means (41, 42, 43, 44, 45) is configured to detect the temperature with regard to the condenser (12), and
wherein the control means (29) is configured to lower a speed of the radial impeller in the second operating mode when the temperature is higher than a set temperature and to increase the speed of the radial impeller in the second operating mode when the temperature is lower than a set temperature.

7. Heat pump according to one of claims 3 to 6 comprising the heat dissipation device (82),
wherein the control signal (36b) is connected to a control (83) of the heat dissipation device or is connected directly to a controllable element (92, 93, 95) of the heat dissipation device (82),
wherein the temperature sensor means (41, 42, 43, 44, 45) is configured to detect the temperature with regard to the evaporator (10) and wherein the control means (29) is configured to change, in the first operating mode, the control signal (36b) such that a heat dissipation of the heat dissipation device decreases when the temperature with regard to the evaporator (10) is below an evaporator temperature set value.

8. Heat pump according to claim 7,
wherein the heat dissipation device (82) comprises a controllable pump (92) in the forward (17a) or the return (17b) of the region to be heated (16), a controllable fan (95) in an air heat exchanger (91) or a controllable 3-way valve between the forward and return (17a, 17b) of the region to be heated (16),
wherein the heat dissipation device (82) is configured to reduce, in the first operating mode, when it is determined by the control means (29) that a temperature with regard to the evaporator (10) is below a set value, a speed of the pump, to reduce a speed of the fan or to control the 3-way valve such that a greater part of liquid from the forward (17a) is mixed in the return (17b) of the region to be heated (16).

9. Heat pump according to one of the preceding claims,
further comprising a heat exchanger (15) on the evaporator side for separating a heat pump cycle from an external cycle, wherein the heat exchanger on the evaporator side comprises two inputs and two outputs, wherein one input and one output are connected to the switching means (94) and another input and another output are connected to the region to be cooled (14).

10. Heat pump according to one of the preceding claims, further comprising:
the control means (29) configured to detect a first temperature on the condenser side and a second temperature on the evaporator side from a temperature sensor means (41, 42, 43, 44),
wherein the control means (29) is configured
to operate the switching means (24, 26, 27, 28, 94, 96) in the first operating mode being the bypass mode when the first temperature is in a first temperature range,
to operate the switching means (24, 26, 27, 28, 94, 96) in the second operating mode being the normal mode when the first temperature is in a second temperature range; and
to operate the switching means (24, 26, 27, 28, 94, 96) in a third operating mode being a free cooling mode when the first temperature is in a third temperature range, wherein the first temperature range comprises temperatures that are lower than temperatures in the second temperature range, and wherein the third temperature range comprises temperatures that are lower than temperatures in the second temperature range and higher than temperatures in the first temperature range.

11. Heat pump according to claim 10,
wherein the switching means (24, 26, 27, 28, 94, 96) is configured to connect, in the free cooling mode, the return (15a, 15c) of the region to be cooled (14) to the condenser inlet (12a) and to connect the return (17b, 17d) of the region to be heated (16) to the evaporator inlet (10a).

12. Heat pump according to one of the preceding claims,
wherein the switching means (24, 26, 27, 28, 94, 96) is configured to connect, in the normal mode, the return (15a, 15c) of the region to be cooled (14) to the evaporator inlet (10a) and to connect the return (17b, 17d) of the region to be heated (16) to the condenser inlet (12a).

13. Heat pump according to claim 1, further comprising a first bypass line (20) configured to be connected to the switching means (24, 26, 27, 28, 94, 96), and a second bypass line (22) configured to be connected to the switching means (24, 26, 27, 28, 94, 96),
wherein, in the bypass mode, the switching means (24, 26, 27, 28, 94, 96) is connectable to the return (15b) of the region to be cooled (14) to the forward (17a) of the region to be heated (16) via the first bypass line (20) and is connectable to the return (17b) of the region to be heated (16) to the forward (15a) of the region to be cooled (14) via the second bypass line (22).

14. Method for pumping heat with an evaporator (10) having an evaporator inlet (10a) and an evaporator outlet (10b), a temperature raiser (34) for raising a temperature of an evaporated operating liquid, a condenser (12) for condensing an evaporated operating liquid with raised temperature, a temperature sensor means (41, 42, 43, 44, 45) with a first temperature sensor (41, 44, 45) for detecting a temperature with regard to the evaporator (10) and with a second temperature sensor (42, 43) for detecting a temperature at the condenser (12) and a switching means (24, 26, 27, 28, 94, 96) for operating the heat pump in a first operating mode or a different second operating mode, comprising:
controlling the heat pump so that the heat pump operates in a first operating mode or a second operating mode based on an output signal of the second temperature sensor, wherein the first operating mode is a bypass mode and wherein the second operating mode is a normal mode, wherein, in the bypass mode, a return (15b) of a region to be cooled (14) is connected to a forward (17a) of a region to be heated (16) and a return (17b) of the region to be heated (16) is connected to a forward (15a) of the region to be cooled (14); and
controlling the temperature raiser (34) based on an output signal of the first temperature sensor.

15. Heat pump system, comprising:
a heat pump according to one of claims 1 to 13;
the region to be heated (16) with the return (17b) from the region to be heated (16); and
the region to be cooled (14) with the return (15b) from the region to be cooled (14).

## Patentansprüche

1. Wärmepumpe, bestehend aus:
einem Verdampfer (10) mit einem Verdampfereinlass (10a) und einem Verdampferauslass (10b);
einem Temperaturerhöher (34) zum Erhöhen einer Temperatur einer verdampften Betriebsflüssigkeit;
einen Kondensator (12) zum Kondensieren einer verdampften Betriebsflüssigkeit mit erhöhter Temperatur;
eine Temperatursensoreinrichtung (41, 42, 43, 44, 45) mit einem ersten Temperatursensor (41, 44, 45) zum Erfassen einer Temperatur bezüglich des Verdampfers (10) und mit einem zweiten Temperatursensor (42, 43) zum Erfassen einer Temperatur am Kondensator (12);
ein Schaltmittel (24, 26, 27, 28, 94, 96), wobei das Schaltmittel (24, 26, 27, 28, 94, 96) ausgelegt ist, um die Wärmepumpe in einem ersten Betriebsmodus oder in einem anderen zweiten Betriebsmodus zu betreiben, wobei der erste Betriebsmodus ein Bypass-Modus ist und wobei der zweite Betriebsmodus ein Normalmodus ist,
wobei das Schaltmittel (24, 26, 27, 28, 94, 96) konfiguriert ist, um, im Bypass-Modus, ein Rücklauf (15b) eines zu kühlenden Bereichs (14) mit einem Vorlauf (17a) eines zu beheizenden Bereichs (16) zu verbinden und einen Rücklauf (17b) des zu beheizenden Bereichs (16) mit einem Vorlauf (15a) des zu kühlenden Bereichs (14) zu verbinden; und
ein Steuermittel (29) zum Steuern der Schaltmittel (24, 26, 27, 28, 94, 96) so dass das Schaltmittel (24, 26, 27, 28, 94, 96) im ersten Betriebsmodus arbeitet oder der zweiten Betriebsmodus auf einen Ausgangssignal des zweiten Temperatursensor (42, 43) basierend ist und zum Steuern des Temperaturerhöhers (34) auf ein Ausgangssignal des ersten Temperatursensors (41, 44, 45) basierend ist.

2. Wärmepumpe nach Anspruch 1,
wobei das Steuermittel (29) konfiguriert ist, um eine Steuerung des Schaltmittels (24, 26, 27, 28, 94, 96) unabhängig vom Ausgangssignal des ersten Temperatursensor (41, 44, 45) durchzuführen, oder, wobei die Steuereinrichtung (29) konfiguriert ist, um eine Steuerung des Temperaturerhöhers (34) unabhängig vom Ausgangssignal des zweite Temperatursensor (42, 43) durchzuführen.

3. Wärmepumpe entweder nach Anspruch 1 oder 2,
wobei das Steuermittel (29) weiterhin konfiguriert ist, um ein Steuersignal (36a), das auf der erfassten Temperatur basierend ist, dem Temperaturerhöher (34) bereitzustellen, wenn die Wärmepumpe im zweiten Betriebsmodus betrieben wird, und ein Steuersignal (36b), das auf der erfassten Temperatur basierend ist, einem Steuerausgang bereitzustellen, der an einen Steuereingang einer Wärmeabfuhreinrichtung (82) anschließbar ist, wenn die Wärmepumpe im Bypass-Modus betrieben wird.

4. Wärmepumpe nach Anspruch 3,
wobei der Temperaturerhöher (34) einen Radialkompressor mit einem Radialflügelrad mit steuerbarer Drehzahl aufweist, wobei das Steuermittel (29) konfiguriert ist, um die Drehgeschwindigkeit des Radialflügelrads durch das Steuersignal (36a) zu steuern, wenn die Wärmepumpe im zweiten Betriebsmodus betrieben wird.

5. Wärmepumpe nach Anspruch 4,
wobei das Steuermittel (29) konfiguriert ist, um die Temperatur des Temperatursensormittels (41, 42, 43, 44, 45) mit einer eingestellten Temperatur zu vergleichen und die Drehgeschwindigkeit durch das Steuersignal (36a) in Abhängigkeit von einer Abweichung der Temperatur von der eingestellten Temperatur zu erhöhen oder zu senken.

6. Wärmepumpe nach Anspruch 4,
wobei die Temperatursensoreinrichtung (41, 42, 43, 44, 45) konfiguriert ist, um die Temperatur im Hinblick auf den Verdampfer (10) zu erkennen und, wobei das Steuermittel (29) ausgelegt ist, um die Drehgeschwindigkeit des Radialflügelrads (36a) im zweiten Betriebsmodus durch das Steuersignal zu erhöhen, wenn die Temperatur höher als eine eingestellte Temperatur ist und die Drehgeschwindigkeit des Radialflügelrads im zweiten Betriebsmodus zu senken, wenn die Temperatur niedriger als eine eingestellte Temperatur ist, oder,
wobei die Temperatursensoreinrichtung (41, 42, 43, 44, 45) konfiguriert ist, um die Temperatur im Hinblick auf den Kondensator (12) zu erkennen und
wobei das Steuermittel (29) konfiguriert ist, um eine Drehgeschwindigkeit des Radialflügelrads im zweiten Betriebsmodus zu senken, wenn die Temperatur höher als eine eingestellte Temperatur ist und die Drehgeschwindigkeit des Radialflügelrads im zweiten Betriebsmodus zu erhöhen, wenn die Temperatur niedriger als eine eingestellte Temperatur ist.

7. Wärmepumpe nach irgendeinem der Ansprüche 3 bis 6, die die Wärmeableitungsvorrichtung (82) aufweist,
wobei das Steuersignal (36b) mit einer Steuerung (83) des Wärmeableitungsvorrichtung verbunden ist oder direkt mit einem steuerbaren Element (92, 93, 95) der Wärmeableitungsvorrichtung (82) verbunden ist,
wobei die Temperatursensoreinrichtung (41, 42, 43, 44, 45) konfiguriert ist, um die Temperatur im Hinblick auf den Verdampfer (10) zu erkennen und wobei das Steuermittel (29) ausgelegt ist, um im ersten Betriebsmodus das Steuersignal (36b) zu verändern, so dass eine Wärmeableitung der Wärmeableitungseinrichtung abnimmt, wenn die Temperatur eines Einstellwerts im Hinblick auf den Verdampfer (10) unterhalb der Verdampftemperatur ist.

8. Wärmepumpe nach Anspruch 7,
wobei die Wärmeableitungsvorrichtung (82) eine steuerbare Pumpe (92) im Vorlauf (17a) oder im Rücklauf (17b) des zu erwärmenden Bereichs (16), einen regelbaren Ventilator (95) in einem Luftwärmetauscher (91) oder ein regelbares 3-Wege-Ventil zwischen dem Vor- und dem Rücklauf (17a, 17b) des zu erwärmenden Bereichs (16) aufweist,
wobei die Wärmeableitungsvorrichtung (82) konfiguriert ist, um im ersten Betriebsmodus zu reduzieren, wenn durch die Steuereinrichtung (29) festgestellt wird, dass eine Temperatur hinsichtlich des Verdampfers (10) unter einem Einstellwert, einer Drehgeschwindigkeit der Pumpe liegt, um eine Drehgeschwindigkeit des Ventilators zu reduzieren oder das 3-Wege-Ventil so zu steuern, dass ein größerer Teil der Flüssigkeit von dem Vorlauf (17a) im Rücklauf (17b) des zu erwärmenden Bereichs (16) gemischt wird.

9. Wärmepumpe nach irgendeinem der vorhergehenden Ansprüche,
die weiterhin einen verdampferseitigen Wärmetauscher (15) zum Abtrennen eines Wärmepumpenkreislauf aus einem externen Kreislauf aufweist, wobei der Wärmetauscher auf der Verdampferseite zwei Eingänge und zwei Ausgänge aufweist, wobei ein Eingang und ein Ausgang mit dem Schaltmittel (94) verbunden sind und ein weiterer Eingang und ein weiterer Ausgang mit dem zu kühlenden Bereich (14) verbunden sind.

10. Wärmepumpe nach irgendeinem der vorhergehenden Ansprüche,
die weiterhin aufweist:
die Steuermittel (29), die konfiguriert sind, um eine erste Temperatur an der Kondensatorseite und eine zweite Temperatur an der Verdampferseite von einem Temperatursensormittel (41, 42, 43, 44) zu erfassen,
wobei das Steuermittel (29) ausgestaltet ist,
um die Schaltmittel (24, 26, 27, 28, 94, 96) im ersten Betriebsmodus zu betreiben, der der Bypass-Modus ist, wenn die erste Temperatur in einem ersten Temperaturbereich liegt,
um die Schaltmittel (24, 26, 27, 28, 94, 96) im zweiten Betriebszustand zu betreiben, der der Normalmodus ist, wenn die erste Temperatur in einer zweiten Temperaturreichweite liegt; und
um die Schaltmittel (24, 26, 27, 28, 94, 96) in einem dritten Betriebsmodus zu betreiben, der ein Freikühlmodus ist, wenn die erste Temperatur in einem dritten Temperaturbereich liegt,
wobei der erste Temperaturbereich Temperaturen aufweist, die niedriger sind als Temperaturen im zweiten Temperaturbereich, und
wobei der dritte Temperaturbereich Temperaturen aufweist, die niedriger sind als Temperaturen im zweiten Temperaturbereich und höher als Temperaturen im ersten Temperaturbereich sind.

11. Wärmepumpe nach Anspruch 10,
wobei das Schaltmittel (24, 26, 27, 28, 94, 96) konfiguriert ist, um im Freikühlbetrieb den Rücklauf (15a, 15c) des zu kühlenden Bereichs (14) mit den Kondensatoreinlass (12a) zu verbinden und den Rücklauf (17b, 17d) des zu beheizenden Bereichs (16) mit dem Verdampfereinlass (10a) zu verbinden.

12. Wärmepumpe nach irgendeinem der vorhergehenden Ansprüche,
wobei das Schaltmittel (24, 26, 27, 28, 94, 96) konfiguriert ist, um im Normalmodus den Rücklauf (15a, 15c) des zu kühlenden Bereichs (14) mit dem Verdampfereinlass (10a) zu verbinden und den Rücklauf (17b, 17d) des zu erwärmenden Bereichs (16) mit dem Kondensatoreinlass (12a) zu verbinden.

13. Wärmepumpe nach Anspruch 1,
die weiterhin eine erste Bypass-Leitung (20) aufweist, die konfiguriert ist, um mit den Schaltmitteln (24, 26, 27, 28, 94, 96) verbunden zu sein, und eine zweite Bypass-Leitung (22) aufweist, die konfiguriert, um mit den Schaltmittel (24, 26, 27, 28, 94, 96) verbunden zu sein,
wobei im Bypass-Modus das Schaltmittel (24, 26, 27, 28, 94, 96) mit dem Rücklauf (15b) des zu kühlenden Bereichs (14) zum Vorlauf (17a) des zu erwärmenden Bereichs (16) über die erste Bypass-Leitung (20) verbindbar ist und mit dem Rücklauf (17b) des zu erwärmenden Bereichs (16) zum Vorlauf (15a) des zu kühlenden Bereichs (14) über die zweite Bypass-Leitung (22) verbindbar ist.

14. Verfahren zum Pumpen von Wärme mit einem Verdampfer (10) mit einem Verdampfereinlass (10a) und einen Verdampferauslass (10b), einen Temperaturerhöher (34) zum Erhöhen einer Temperatur einer verdampften Betriebsflüssigkeit, einem Kondensator (12) zum Kondensieren einer verdampften Betriebsflüssigkeit mit erhöhter Temperatur, ein Temperatursensormittel (41, 42, 43, 44, 45) mit einem ersten Temperatursensor (41, 44, 45) zum Erfassen einer Temperatur hinsichtlich des Verdampfers (10) und mit einem zweiten Temperatursensor (42, 43) zum Erfassen einer Temperatur am Kondensator (12) und einem Schaltmittel (24, 26, 27, 28, 94, 96) zum Betreiben der Wärmepumpe in einem ersten Betriebsmodus oder einem anderen, zweiten Betriebsmodus, das aufweist:
Steuern der Wärmepumpe, so dass die Wärmepumpe in einem ersten Betriebsmodus oder in einem zweite Betriebsmodus arbeitet, basierend auf einem Ausgangssignal des zweiten Temperatursensors, wobei der erste Betriebsmodus ein Bypass-Modus ist und wobei der zweite Betriebsmodus ein Normalmodus ist,
wobei, im Bypass-Modus ein Rücklauf (15b) von einem zu kühlenden Bereich (14) mit einem Vorlauf (17a) eines zu erwärmenden Bereichs (16) verbunden ist und ein Rücklauf (17b) des zu erwärmenden Bereichs (16) mit einem Vorlauf (15a) des zu kühlenden Bereichs (14) verbunden ist; und
Steuern des Temperaturerhöhers (34) basierend auf einem Ausgangssignal des ersten Temperatursensor.

15. Wärmepumpensystem, das aufweist:
eine Wärmepumpe nach irgendeinem der Ansprüche 1 bis 13;
den zu erwärmenden Bereich (16) mit dem Rücklauf (17b) von dem zu erwärmenden Bereich (16); und
den zu kühlenden Bereich (14) mit dem Rücklauf (15b) von dem zu kühlenden Bereich (14).

## Revendications

1. Pompe à chaleur, comprenant :
un évaporateur (10) avec une entrée d'évaporateur (10a) et une sortie d'évaporateur (10b) ;
un système d'augmentation de température (34) destiné à augmenter une température d'un liquide de fonctionnement évaporé ;
un condenseur (12) destiné à condenser un liquide de fonctionnement évaporé à une température augmentée ;
un moyen de capteur de température (41, 42, 43, 44, 45) avec un premier capteur de température (41, 44, 45) destiné à détecter une température par rapport à l'évaporateur (10) et avec un deuxième capteur de température (42, 43) destiné à détecter une température sur le condenseur (12) ;
un moyen de commutation (24, 26, 27, 28, 94, 96), dans laquelle le moyen de commutation (24, 26, 27, 28, 94, 96) est configuré pour faire fonctionner la pompe à chaleur dans un premier mode de fonctionnement ou dans un deuxième mode de fonctionnement différent, dans laquelle le premier mode de fonctionnement est un mode de dérivation et dans laquelle le deuxième mode de fonctionnement est un mode normal,
dans laquelle le moyen de commutation (24, 26, 27, 28, 94, 96) est configuré pour connecter, dans le mode de dérivation, un retour (15b) d'une région à refroidir (14) à une partie avant (17a) d'une région à chauffer (16) et pour relier un retour (17b) de la région à chauffer (16) à une partie avant (15a) de la région à refroidir (14) ; et
un moyen de commande (29) destiné à commander le moyen de commutation (24, 26, 27, 28, 94, 96) de telle sorte que le moyen de commutation (24, 26, 27, 28, 94, 96) fonctionne dans le premier mode de fonctionnement ou le deuxième mode de fonctionnement sur la base d'un signal de sortie du deuxième capteur de température (42, 43) et destiné à commander le système d'augmentation de température (34) sur la base d'un signal de sortie du premier capteur de température (41, 44, 45).

2. Pompe à chaleur selon la revendication 1,
dans laquelle le moyen de commande (29) est configuré pour réaliser une commande du moyen de commutation (24, 26, 27, 28, 94, 96) indépendamment du signal de sortie du premier capteur de température (41, 44, 45), ou dans laquelle le moyen de commande (29) est configuré pour réaliser une commande du système d'augmentation de température (34) indépendamment du signal de sortie du deuxième capteur de température (42, 43).

3. Pompe à chaleur selon la revendication 1 ou 2,
dans laquelle le moyen de commande (29) est configuré en outre pour fournir un signal de commande (36a) sur la base de la température détectée au système d'augmentation de température (34) lorsque la pompe à chaleur fonctionne dans le deuxième mode de fonctionnement et pour fournir un signal de commande (36b) sur la base de la température détectée à une sortie de commande qui peut être reliée à une entrée de commande du dispositif de dissipation de chaleur (82) lorsque la pompe à chaleur fonctionne dans le mode de dérivation.

4. Pompe à chaleur selon la revendication 3,
dans laquelle le système d'augmentation de température (34) comprend un compresseur radial avec une roue radiale à régulation de vitesse, dans laquelle le moyen de commande (29) est configuré pour commander la vitesse de la roue radiale par le signal de commande (36a) lorsque la pompe à chaleur fonctionne dans le deuxième mode de fonctionnement.

5. Pompe à chaleur selon la revendication 4,
dans laquelle le moyen de commande (29) est configuré pour comparer la température du moyen de commande de température (41, 42, 43, 44, 45) à une température de consigne et pour augmenter ou abaisser la vitesse par le signal de commande (36a) en fonction d'un écart de la température par rapport à la température de consigne.

6. Pompe à chaleur selon la revendication 4,
dans laquelle le moyen de capteur de température (41, 42, 43, 44, 45) est configuré pour détecter la température par rapport à l'évaporateur (10) et dans laquelle le moyen de commande (29) est configuré pour augmenter la vitesse de la roue radiale par le signal de commande (36a) dans le deuxième mode de fonctionnement lorsque la température est plus élevée qu'une température de consigne et pour abaisser la vitesse de la roue radiale dans le deuxième mode de fonctionnement lorsque la température est inférieure à une température de consigne, ou
dans laquelle le moyen de capteur de température (41, 42, 43, 44, 45) est configuré pour détecter la température par rapport au condenseur (12), et dans laquelle le moyen de commande (29) est configuré pour abaisser une vitesse de la roue radiale dans le deuxième mode de fonctionnement lorsque la température est plus élevée qu'une température de consigne et pour augmenter la vitesse de la roue radiale dans le deuxième mode de fonctionnement lorsque la température est inférieure à une température de consigne.

7. Pompe à chaleur selon l'une quelconque des revendications 3 à 6, comprenant le dispositif de dissipation de chaleur (82),
dans laquelle le signal de commande (36b) est relié à une commande (83) du dispositif de dissipation de chaleur ou est relié directement à un élément pouvant être commandé (92, 93, 95) du dispositif de dissipation de chaleur (82), dans laquelle le moyen de capteur de température (41, 42, 43, 44, 45) est configuré pour détecter la température par rapport à l'évaporateur (10) et dans laquelle le moyen de commande (29) est configuré pour modifier, dans le premier mode de fonctionnement, le signal de commande (36b) de telle sorte qu'une dissipation de chaleur du dispositif de dissipation de chaleur baisse lorsque la température par rapport à l'évaporateur (10) est inférieure à une valeur de consigne de température d'évaporateur.

8. Pompe à chaleur selon la revendication 7,
dans laquelle le dispositif de dissipation de chaleur (82) comprend une pompe pouvant être commandée (92) dans la partie avant (17a) ou le retour (17b) de la région à chauffer (16), un ventilateur pouvant être commandé (95) dans un échangeur de chaleur d'air (91) ou une soupape à 3 voies pouvant être commandée entre la partie avant et le retour (17a, 17b) de la région à chauffer (16),
dans laquelle le dispositif de dissipation de chaleur (82) est configuré pour réduire, dans le premier mode de fonctionnement, lorsqu'il est déterminé par le moyen de commande (29) qu'une température par rapport à l'évaporateur (10) est inférieure à une valeur de consigne, une vitesse de la pompe, pour réduire une vitesse du ventilateur ou pour commander la soupape à 3 voies de telle sorte qu'une partie plus importante de liquide provenant de la partie avant (17a) est mélangée dans le retour (17b) de la région à chauffer (16).

9. Pompe à chaleur selon l'une quelconque des revendications précédentes, comprenant en outre un échangeur de chaleur (15) sur le côté d'évaporateur pour séparer un cycle de pompe à chaleur d'un cycle externe, dans laquelle l'échangeur de chaleur sur le côté évaporateur comprend deux entrées et deux sorties, dans laquelle une entrée et une sortie sont reliées au moyen de commutation (94) et une autre entrée et une autre sortie sont reliées à la région à refroidir (14).

10. Pompe à chaleur selon l'une quelconque des revendications précédentes, comprenant en outre :
le moyen de commande (29) configuré pour détecter une première température sur le côté de condenseur et une deuxième température sur le côté d'évaporateur à partir d'un moyen de capteur de température (41, 42, 43, 44),
dans laquelle le moyen de commande (29) est configuré
pour faire fonctionner le moyen de commutation (24, 26, 27, 28, 94, 96) dans le premier mode de fonctionnement qui est le mode de dérivation lorsque la première température se situe dans une première plage de températures, pour faire fonctionner le moyen de commutation (24, 26, 27, 28, 94, 96) dans le deuxième mode de fonctionnement qui est le mode normal lorsque la première température se situe dans une deuxième plage de températures ; et
pour faire fonctionner le moyen de commutation (24, 26, 27, 28, 94, 96) dans un troisième mode de fonctionnement qui est un mode de refroidissement libre lorsque la première température est dans une troisième plage de températures, dans laquelle la première plage de températures comprend des températures qui sont inférieures à des températures dans la deuxième plage de température, et dans laquelle la troisième plage de températures comprend des températures qui sont inférieures à des températures dans la deuxième plage de températures et sont supérieures à des températures dans la première plage de températures.

11. Pompe à chaleur selon la revendication 10,
dans laquelle le moyen de commutation (24, 26, 27, 28, 94, 96) est configuré pour relier, dans le mode de refroidissement libre, le retour (15a, 15c) de la région à refroidir (14) à l'entrée de condenseur (12a) et pour relier le retour (17b, 17d) de la région à chauffer (16) à l'entrée d'évaporateur (10a).

12. Pompe à chaleur selon l'une quelconque des revendications précédentes,
dans laquelle le moyen de commutation (24, 26, 27, 28, 94, 96) est configuré pour relier, dans le mode normal, le retour (15a, 15c) de la région à refroidir (14) à l'entrée d'évaporateur (10a) et pour relier le retour (17b, 17d) de la région à chauffer (16) à l'entrée de condenseur (12a).

13. Pompe à chaleur selon la revendication 1, comprenant en outre une première ligne de dérivation (20) configurée pour être reliée au moyen de commutation (24, 26, 27, 28, 94, 96) et une deuxième ligne de dérivation (22) configurée pour être reliée au moyen de commutation (24, 26, 27, 28, 94, 96),
dans laquelle, dans le mode de dérivation, le moyen de commutation (24, 26, 27, 28, 94, 96) peut être relié au retour (15b) de la région à refroidir (14) à la partie avant (17a) de la région à chauffer (16) par l'intermédiaire de la première ligne de dérivation (20) et peut être relié au retour (17b) de la région à chauffer (16) à la partie avant (15a) de la région à refroidir (14) par l'intermédiaire de la deuxième ligne de dérivation (22).

14. Procédé destiné à pomper de la chaleur avec un évaporateur (10) présentant une entrée d'évaporateur (10a) et une sortie d'évaporateur (10b), un système d'augmentation de température (34) destiné à augmenter une température d'un liquide de fonctionnement évaporé, un condenseur (12) destiné à condenser un liquide de fonctionnement évaporé à une température augmentée, un moyen de capteur de température (41, 42, 43, 44, 45) avec un premier capteur de température (41, 44, 45) destiné à détecter une température par rapport à l'évaporateur (10) et avec un deuxième capteur de température (42, 43) destiné à détecter une température sur le condenseur (12) et un moyen de commutation (24, 26, 27, 28, 94, 96) destiné à faire fonctionner la pompe à chaleur dans un premier mode de fonctionnement ou dans un deuxième mode de fonctionnement différent, comprenant :
la commande de la pompe à chaleur de telle sorte que la pompe à chaleur fonctionne dans un premier mode de fonctionnement ou un deuxième mode de fonctionnement sur la base d'un signal de sortie du deuxième capteur de température, dans lequel le premier mode de fonctionnement est un mode de dérivation et dans lequel le deuxième mode de fonctionnement est un mode normal, dans lequel, dans le mode de dérivation, un retour (15b) d'une région à refroidir (14) est relié à une partie avant (17a) d'une région à chauffer (16) et un retour (17b) de la région à chauffer (16) est relié à une partie avant (15a) de la région à refroidir (14) ; et
la commande du système d'augmentation de température (34) sur la base d'un signal de sortie du premier capteur de température.

15. Système de pompe à chaleur comprenant :
une pompe à chaleur selon l'une quelconque des revendications 1 à 13 ;
la région à chauffer (16) avec le retour (17b) provenant de la région à chauffer (16) ; et
la région à refroidir (14) avec le retour (15b) provenant de la région à refroidir (14).
